# EUROPEAN PATENT SPECIFICATION

(11) **EP 2 725 334 B1**
(45) Date of publication and mention of the grant of the patent: **15.04.2020**
(21) Application number: 12007333.3
(22) Date of filing: 25.10.2012
(51) Int. Cl.: G01L 9/00

(54) **A pressure sensor having a membrane and a method for fabricating the same**
Drucksensor mit einer Membrane und Herstellungsverfahren dafür
Capteur de pression comportant une membrane et procédé de fabrication de celui-ci

(43) Date of publication of application: 30.04.2014
(73) Proprietor: Invensense, Inc., San Jose, California 95110 (US)
(72) Inventor: Mayer, Felix, 8712 Stäfa (CH)
(74) Representative: Smith, Jeremy Robert

(56) References cited:
- US-A- 4 730 496
- US-A1- 2008 236 292
- US-A1- 2010 055 821
- US-B2- 7 246 525
- US-B2- 7 539 003

## Description

### FIELD OF THE INVENTION

The present invention relates to pressure sensors and methods for fabricating the same.

### BACKGROUND OF THE INVENTION

Pressure sensors and methods of manufacturing pressure sensors are known. In the co-owned United States patent no. US 7704774 B2 for example, there is described a pressure sensor, which is manufactured by joining two wafers, the first wafer comprising CMOS circuitry and the second being an SOI wafer. A recess is formed in the top material layer of the first wafer, which is covered by the silicon layer of the second wafer to form a cavity. Part or all of the substrate of the second wafer is removed to form a membrane from the silicon layer. Alternatively it is further described that the cavity can be formed in the second wafer. The second wafer is electrically connected to the circuitry on the first wafer. The known design allows for the use of standard CMOS processes for integrating circuitry on the first wafer.

In the known '774 patent there is also described a pressure sensor having a first chamber forming a capacitor connected to a second, much larger chamber which serves to improve the volume to surface ratio of the total cavity, and thereby improves the stability of the absolute pressure therein.

In the co-owned published European patent application EP 2112487 A1, a pressure sensor is described with a membrane integrated on a semiconductor chip being coated with a flexible, soft cover layer forming two ports providing access to the opposite sides of the membrane. One port is sealingly connected to a connecting member of the housing of the device, while the other communicates with a chamber within the housing. An exit opening at the bottom allows the second port to communicate with a second pressure reservoir.

A differential pressure sensor is described in the co-owned published United States patent application US 2010/055821 A1. The sensor has a membrane arranged over a cavity on a semiconductor substrate. A lid layer is arranged at the top side of the device and comprises an access opening for providing access to the top side of the membrane. A channel extends laterally from the cavity and intersects with a bore. The bore is formed by laser drilling from the bottom side of the substrate and provides access to the bottom side of the membrane. The bore extends all through the substrate and optionally into the lid layer.

In US 7,539,003 capacitive sensors are disclosed with single crystal silicon on all key stress points. Isolating trenches are formed by trench and refill forming dielectrically isolated conductive silicon electrodes for drive, sense and guards. For pressure sensing devices, the pressure port is opposed to the electrical wire bond pads for ease of packaging.

Whilst the above sensors and methods of manufacturing are generally satisfactory, it is advantageous to reduce the size of such pressure sensors, particularly the size of the operational sensor as deployed. For known sensors this size includes the size of the chip, protective layers and/or packaging. It is further seen as disadvantageous for at least some applications to make electrical contact from above to the CMOS layer of the wafer or chip carrying the sensor, i.e. from the side which carries the membrane exposed to the fluid.

US 2008/0236292 A1 describes, in accordance with its abstract, a "sensor element having a sensitive sensor portion on an upper side of a substrate layer. The upper side of the substrate layer is provided with a recess on the periphery of the sensitive sensor portion. The recess provides mechanical isolation or decoupling of the sensitive sensor portion, as a result of which external forces do not cause stress in the sensitive sensor portion. In addition, a sensor assembly is described which is provided with at least one sensor element and a casing.

### SUMMARY OF THE INVENTION

Hence, according to a first aspect of the invention, there is provided a pressure sensor, particularly an absolute pressure sensor, with a deformable membrane providing a separation between a cavity with an esentially constant pressure and a port open to the outside of the sensor, with the cavity having a measuring chamber with an associated sensing device for transforming the response of the deformable membrane to the pressure at the port into a signal capable of being processed by a processing circuit being mounted onto a substrate, with the sensor being formed essentially from a stack of at least three layers with a first layer including the substrate and the processing circuit, the second layer the membrane and the third layer being a thick protective layer adapted for use as a handling layer. The port is a hole through the third layer. The three layers are bonded on top of each other in the sequence indicated by their respective number.

To act as a handling layer for wafer processing steps, the third layer has preferably a thickness of at least 50 per cent of the total thickness of the stack in the manufactured sensor. In the manufactured sensor the thickness of the substrate is preferably reduced to less than 250 µm in order to facilitate an electric contacting through the substrate using for example a method known as TSV ("through silicon via"). Hence the third or cover layer with the pressure port exceeds this thickness.

The third layer is best made of silicon or glass material.

In a preferred embodiment of the invention, the processing circuitry is contacted to external circuits through an electrical contact passing through an essentially vertical hole in the substrate wafer or wafer die onto which layers forming the processing circuitry are deposited. In a preferred variant of the invention contacting is made using a TSV process.

In another variant of this embodiment, the thickness of the substrate wafer is reduced to 150 µm (micron) or less rendering it more suitable for TSV or similar processes. When reducing the thickness the cover wafer mentioned above is used to provide mechanical stability. The total height of the stacked layers of substrate wafer, deposited layers, membrane layer, bond and cover wafer can thus be reduced to 600 µm or less. By choosing a suitable, resilient material and thickness of the cover wafer, the top surface can be adapted to be directly exposed to the environment without packaging or even without additional protective layers.

A mechanical decoupling is provided between the membrane and other parts of the sensor or sensor layers. This decoupling can be achieved by introducing areas of reduced stiffness at locations between the location of the membrane (and the measuring chamber) and the edges of the sensor or points where the sensor is mechanically contacted from the outside. The decoupling can include one or more trenches in the substrate wafer or wafer die at an intermediate location between the contact position on the waver and the location of the measuring chamber or in the cover layer at locations around the measuring chamber. The trenches may surround the location of the measuring chamber except for small areas or bridges required to maintain mechanical stability.

In a preferred embodiment of the invention the sensor has a buffer chamber located above the plane of the membrane with a larger volume than the measuring chamber and a measuring chamber located beneath the plane of the membrane and the channel traversing the plane of the membrane and connecting the buffer chamber and the measuring chamber to allow fluid transfer between both.

In a preferred embodiment of this aspect of the invention the buffer chamber is formed within the third or cover wafer bonded directly or via intermediate layers onto the layer including the membrane such that the bond forms a pressure or hermetic seal around an opening of the buffer chamber. The bonding is best a bond including eutectic material. In a further variant of the embodiment the bond is at least partially an electrically insulating bond or formed in conjunction with an electrically insulating layer thus electrically insulating the cover wafer from the membrane and any processing circuitry the membrane might be connected to.

The sensor can also include a reference measuring chamber which is not connected to the outside. The reference chamber can be used in a differential measurement of the pressure which offsets any variation in the manufacturing process of the sensor or drifts and facilitates calibration. For that purpose the reference chamber is best manufactured using the same process as the actual measurement chamber.

In another aspect of the invention there is provided a method of manufacturing a pressure sensor, in particular an absolute pressure sensor, by first preparing a first wafer with a processing circuit, such as a CMOS wafer, following well-known steps. The wafer is then processed to create a recess for a measuring chamber and parts of a channel connected to the chamber. Onto this first wafer, there is bonded a second, membrane carrying wafer with the membrane providing the cover for the recess thus creating a first or measuring chamber. A third or cover wafer is prepared by generating at least part of a port to pass through the third wafer and after essentially reducing the second wafer to the membrane only, the third cover wafer is bonded onto the remains of the second wafer or onto the first wafer and is used as handling layer to handle the sensor during subsequent processing steps.

In a preferred variant of this method the substrate of the first wafer is reduced to 250 µm, preferably 150 µm, or less. One or more holes passing through the substrate are then formed. This step is preferably performed after the third wafer is mounted and can be used as handling substrate. The hole or holes are electrically isolated from the substrate, preferably by a layer of SiO₂, and filled with a conducting material to provide electrical contact to the processing circuit.

It is further possible to create areas of reduced stiffness in the sensor, for example by generating a trench in the substrate of the first wafer between the location of the one or more holes and the location of the first chamber with the membrane or by trenches in the cover wafer.

In addition to the port hole the third layer can be processed to include another recess. Using a hermetic seal around the opening of the recess a second or buffer chamber can be provided, which is connected via a channel to the measuring chamber. The seal is preferably provided by using a eutectic bonding.

The port hole piercing the third layer is best produced in a process with at least two steps in which the first step includes the opening of a recess or cavity in the bottom side of the layer and the second step making a smaller hole between the cavity and the outside of the sensor.

The processing circuitry is preferably CMOS (or bipolar) circuitry to receive electrical signals generated by the sensing element in response to the pressure of the fluid with one or more sensor elements formed by parts of the second wafer.

The bonding process between the first and the second wafer and/or between the second and the third wafer can be performed using the wafers as a whole or after being cut into individual chips.

The above and other aspects of the present invention together with further advantageous embodiments and applications of the invention are described in further details in the following description and figures.

### BRIEF DESCRIPTION OF THE FIGURES

Fig. 1A shows a schematic sectional view of a pressure sensor in accordance with an example of the invention;
Fig. 1B is a schematic horizontal cross-section of the sensor of Fig. 1A;
Fig. 1C shows a schematic horizontal cross-section of a variant of the sensor of Fig. 1A;
Figs. 1D and 1E show further variants of the sensor of Fig. 1A,
Figs. 1F and 1G illustrate variants of the sensor of Fig. 1A with reference chambers and
Figs. 2A - 2H illustrate schematically steps of an exemplary method for manufacturing a pressure sensor in accordance with the present invention.

### DETAILED DESCRIPTION

In this specification, references to vertical directions, orientations and locations such as "top", "bottom", "down", "above" or "below" are to be understood unless stated otherwise such that the bottom layer is formed by the substrate of the semiconductor wafer. The term "pressure sensor" as used herein designates any type of sensor measuring a parameter that is equal to or derived from the pressure of a fluid. In particular, the term designates relative (i.e. differential) as well as absolute pressure sensors, it also covers static as well as dynamic pressure sensors, an important example of a dynamic pressure sensor being a microphone for detecting pressure oscillations in the range of some Hertz to some MHz. Typical examples of applications of such sensors are e.g. in scientific instrumentation, meteorology, altitude measurement, sound recording, mobile or portable computers and phones etc.

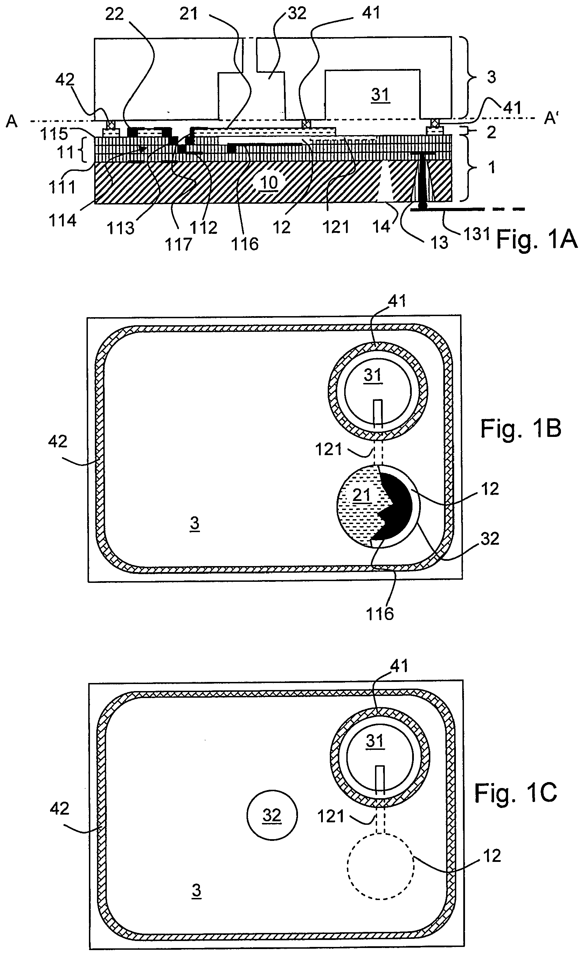

The basic design of one embodiment of the pressure sensor according to the present invention is shown in Figs. 1A and 1B, the latter being a cross-section along line A-A' of Fig 1A.

The sensor includes a semiconductor chip part 1. The semiconductor chip has a silicon substrate 10 having various layers and structures 11 applied through a CMOS manufacturing processes as known per se. The layers and structures 11 can include for example a plurality of SiO2 layers 111 and metal or polysilicon layers 112, 113 or other doped regions (not shown) within the silicon. These components can form an active circuitry 114, such as amplifiers, A/D converters or other analog and/or digital signal processing units. The semiconductor chip has a topmost dielectric layer 115 of silicon oxide and/or silicon nitride protecting the structures below it.

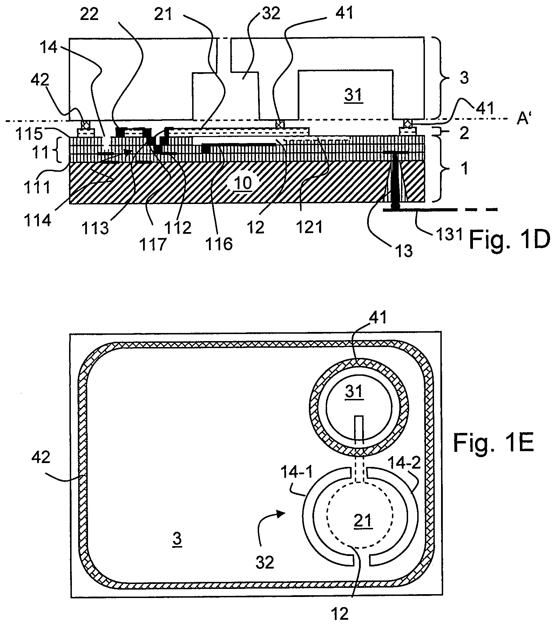

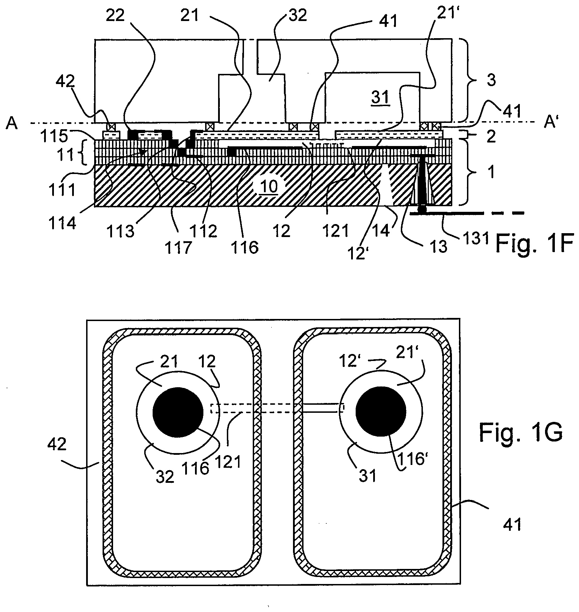

Further, a pressure sensitive membrane 21 is applied over the silicon chip. In the embodiment of Fig. 1, membrane 21 is formed by a doped, conducting silicon layer. Membrane 21 is sufficiently thin such that it deforms depending on the pressure drop between the pressure at the top of the membrane and below it. The deformation is sufficient to allow a measurement of this pressure. Membrane 21 is arranged as a sealing lid over a cavity 12. The cavity 12 is accessible through a channel 121. In the figure, channel 121 is shown extending below membrane 21 and connecting the cavity 12 to an opening at the top side.

This opening is covered by a recess 31 within a third layer 3. This third layer 3 is a thick, mechanically stable and inert layer and can be manufactured from a silicon wafer or glass wafer. Third layer 3 further includes a port hole 32 going through layer 3 and providing access to membrane 21 for fluids from the outside of the whole structure shown.

As shown in Fig. 1B, an area around the opening of recess 31 facing channel 121 is sealed by a eutectic bond 41 effectively leaving recess 31 and cavity 12 in pressure communication with each other but sealed to the outside. In this arrangement cavity 12 forms a measuring chamber and recess 31 a buffer chamber providing a large volume to improve the vacuum in the smaller measuring chamber 12. The principle of such an arrangement is known per se and described for example in the '774 patent and other references cited in the background section above.

As also shown in Fig. 1B, which is a schematic cross-section along line A-A' at the bottom of wafer 3, a second seal 42 surrounds the area with the port 32 and the recess 31 at the level between wafer 2 and wafer 3. As visible from Figs. 1A and 1B, essentially all of the volume between seal 42 and seal 42 is accessible through the port 32. In order to prevent leakage from this volume into the measuring chamber 12, it can be advantageous to provide additional hermetic seals 22 at locations in the layer 2 which give potentially access to the interface between layer 2 and layer 1. In the present example such seals 22 are provided by depositing a barrier of aluminum onto edges of layer 2.

In Fig. 1C there is shown a variant of the sensor of Figs. 1A and 1B above. In this variant the port 32 is moved away from being located directly above chamber 12 to a central position on the chip assembly, while the location of the chamber 12 remains close to the edge of the chip area. This particular arrangement of port 32 relative to the chamber 12 has the advantage of preventing a direct impact through port 32 onto the thin deformable membrane 21. Additionally for some applications positioning port hole 32 at or close to the center of cover wafer 3 can provide a good distribution of stresses. This enhances the mechanical stability of the cover without significantly deteriorating the performance of the pressure sensing element as detailed below.

In the embodiments of Figs. 1, the pressure sensing element is a capacitive sensor with the membrane 21 forming a first electrode at the top side of cavity 12 connected via suitable metal leads 117 to a metal layer (such as the M6 layer, not shown) of the circuitry 114 on the semiconductor chip 1. A second electrode 116 is arranged at the bottom side of cavity 12 and is also connected to the circuitry 114 of semiconductor chip 1. Depending on the pressure drop over membrane 21, the electrical capacitance between membrane 21 and electrode 116 will vary, thereby allowing the pressure drop (or any quantity dependent thereon) to be measured.

It should be noted, however, that the present invention is not limited to embodiments where the sensing element is a capacitive sensor as described. Rather, it can be used with any type of pressure sensors that uses a deformable membrane in order to measure a quantity dependent on the pressure drop over the same. In particular, the invention can also be used for sensors where the deformation of the membrane is measured by piezoresistive means.

The processing circuit 114 of the sensor of Figs. 1 is contacted electrically from the outside through a hole 13 created and refilled using a process known per se as "through-silicon via" or TSV or similar processes. The hole 13 passes through the wafer substrate 10 from the bottom to the level 11 of the CMOS layers and connects to a metal layer within layers 11. The contact wire in hole 13 is insulated from the substrate by a Silicon dioxide layer surrounding the metal core. The "through-silicon" contact leaves the top of the sensor free from contact leads 131 to the outside and facilitates a more compact design of the whole sensor and sensor package.

For example when regarding the circumference of layer 3 as shown in Fig. 1B as dicing line for the sensor chip beneath it, the top surface of layer 3 could be the surface of a whole sensor package and as such be directly exposed to the fluid, whilst any additional packaging is arranged around the edges and bottom only.

However, contact through contact leads 131 can potentially transfer forces from the outside to the sensor and particularly to membrane 21. In order to protect the membrane a mechanical decoupling or stress relieve 14 is arranged between the location of the TSV hole 13 and the location of the measuring chamber 12. In the example of Fig. 1A this stress relieve is a deep trench 14 from the bottom of the wafer substrate 10 to the level 11 of the CMOS layers. Ideally, though not shown in the schematic drawing of Figs. 1, trench 14 follows a circumferential path around the location of measuring chamber 12 and membrane 21. Bridges (not shown) across trench 14 can remain in the silicon substrate to increase the mechanical stability of such an implementation of the invention.

A similar decoupling can be achieved if trench 14 is created from the top through CMOS layers 11 terminating for example on a metal layer as shown in Fig. 1D, which otherwise shows the same elements as Fig. 1A.

A particularly advantageous decoupling is shown in Fig. 1E. In this example the port hole 32 is reshaped as two half-circular trenches 14-1, 14-2 arranged on the circumference of a circle around the position of a vertical projection of the membrane 21 or of the measuring chamber 12 onto the top of cover layer 3. The two half-circular trenches 14-1, 14-2 are penetrating through cover layer 3 leaving only small bridges between them.

To improve the design of the pressure sensor shown in Fig. 1A it is possible to add a reference measuring chamber 12' with a membrane 21' manufactured in parallel and in accordance with essentially the same specifications as the actual measuring chamber 12 and membrane 21. As shown in Figs. 1F and 1G, the reference chamber 12' and membrane 21' can be located advantageously below the buffer chamber 31. The channel 121 connects both chambers 12,12' with the buffer chamber 31. With reference chamber 12' being essentially identical to the measuring chamber 12, a differential measurement between the signals from both chambers can be performed making the task of calibrating the pressure measurement easier.

With most other features and elements of Figs. 1F and 1G being identical or similar to the elements of Fig. 1A and hence denoted using the same reference numerals, the hermetic seals 41,42 are arranged differently. In the present example, they form two separate sealed areas between cover layer 3 and membrane layer 2. The first area is connected to the port hole 32 and hence open to the environment, whilst the second is connected to the recess 31 and the respective vacuum sides of chambers 12,12'.

In the following, steps of a method are described for manufacture a pressure sensor in accordance with an example of the present invention. The first steps follow closely processes and methods described for example in the '774 patent and the '821 patent application. Reference is made to those documents for further details of those processes below, which are known per se.

These steps substantially involve the formation of CMOS circuitry and a recess in a first wafer consisting of the base substrate and the material layers deposited thereon. The first wafer is subsequently joined to a second wafer, which is an SOI wafer having a handle substrate of silicon (on any other suitable material) with an insulating layer and a silicon layer deposited thereon. And the second wafer is machined to form a membrane. In subsequent steps, a third or cover wafer is bonded onto the second wafer to provide a handling layer and a second larger vacuum chamber. The bottom substrate of the first wafer is then reduced in thickness before preparing for a TSV contact and a stress relieve through the substrate.

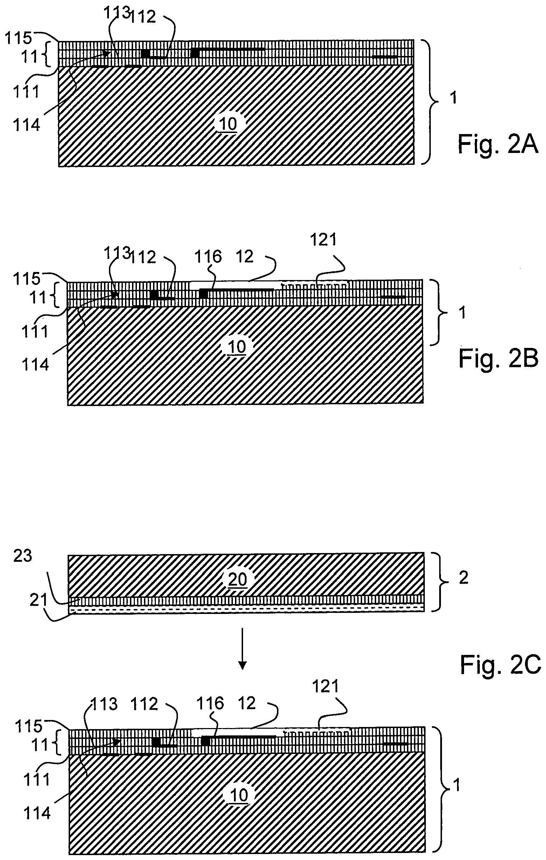

In a first step illustrated in Fig. 2A, CMOS circuitry 114 is applied to base substrate 10 of first wafer 1 using a conventional CMOS manufacturing process. This process comprises the application of various material layers 11, such as silicon dioxide layers 111 with polysilicon and/or metal layers 112,113 arranged therebetween. Typically, the layers are topped with a passivation layer 115 of silicon dioxide or silicon nitride.

Advantageously, passivation layer 115 in its turn is composed of two sublayers, namely a SiN layer topped by an SiO₂ layer. The SiN layer serves as a barrier and protects the circuitry 114 in particular from water. The SiO₂ layer serves as a bonding surface for the components to be bonded to it, in particular a second wafer or third wafer as described below.

In a step illustrated by Fig. 2B recess 12 and channel 121 are formed on the top surface of wafer 1. Recess 12 and channel 121 can extend through part or all of the material layers 11, but not, or not necessarily, into base substrate 10. In the embodiment shown in Fig. 2B, recess 12 extends through passivation layer 115 and topmost silicon dioxide layer 111. Recess 12 and channel 121 can be formed either by locally removing these layers using etching techniques or by locally omitting the layers using masking techniques. In this example recess 12 reaches down to the topmost metal layer. This layer can then be patterned to form the electrode 116. Forming this type of recess is part of the conventional CMOS manufacturing process and is often used for creating for example contact windows.

In a next step as shown in Fig. 2C, second wafer 2 is mounted onto first wafer 1. Membrane 21 is formed as part or layer of the second wafer 2 with a single or multiple layer structure of silicon and/or silicon oxide and/or silicon nitride. These types of wafer 2 are typically referred to as SOI wafers. In this example, second wafer 2 comprises a substrate 20, advantageously of silicon, which carries an insulating layer 23 e.g. of silicon dioxide and a strongly doped silicon layer 21. Optionally, silicon layer 21 can be topped with a second dielectric layer for insulation and passivation.

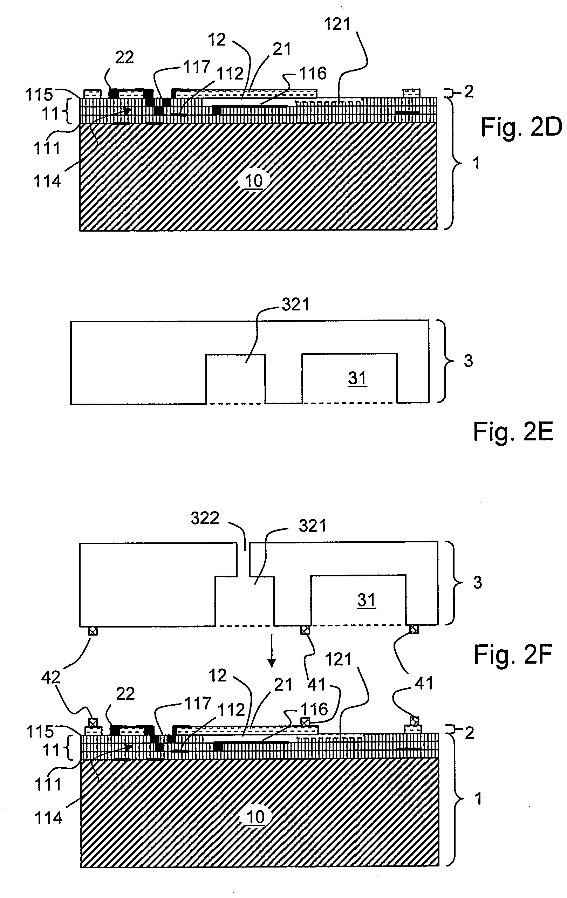

Second wafer 2 is bonded to first wafer 1 in such a way that silicon layer 21 is facing first wafer 1. Now all of the substrate 20 of the second wafer is removed using a chemical etching process or a combination of mechanical milling and subsequent etching leaving essentially only the membrane layer 21 and insulating layers at positions later used for eutectic bonding as described below. Material is also removed above areas with contact windows such as the window for metal leads 117. At this step an aluminum seal 22 can be placed around all edges exposing the interface between wafers 1 and 2 to manufacture a structure as shown in Fig. 2D.

Whilst the above steps have been used in manufacturing processes for known pressure sensors, the method of manufacturing a pressure sensors in accordance with the present invention requires a third wafer or layer 3. As stated above this layer is made of a hard material as it can act as cap or cover wafer and as such be exposed directly to the environment. Suitable materials for layer 3 include silicon or glass. Also, third wafer 3 has to be of sufficient thickness to accommodate the recess 31 and to allow for handling of the combined stack of all wafers 1,2,3 during the TSV process at a later step. A thickness of layer 3 in the range of 150 to 500 is considered appropriate for most applications.

The recess 31 and the port 32 can be created using a chemical (wet) etching process, plasma etching process, laser cutting, mechanical milling or a combination of any of these processes. Fig. 2E shows third wafer 3 after a first processing step using the same process parameter to create recess 31 and the first part 321 of the port opening 32 in the bottom face of wafer 3. Then a second processing step is used to make a smaller hole 322 through the remaining part of wafer 3 to create a pressure port 32 in the top face of wafer 3 to the outside.

After the wafer 3 is prepared, lines of diffusion or eutectic bonding material such as In-Au, Si-Au, In-Ge, Au-Si or Al-Ge are applied on the bottom surface of wafer 3 and/or the top surface of wafer 2 at the locations where a sealing connection 41, 42 between the two wafers is required. This step is illustrated in Fig. 2F. Alternatively, anodic bonding can be used in this step.

The wafers are stacked in a vacuum chamber and heated to a temperature above the eutectic temperature to locally fuse both wafers 2,3 and form a seal 41 around recess 31 and a seal 42 along the perimeter of the chip area of the sensor.

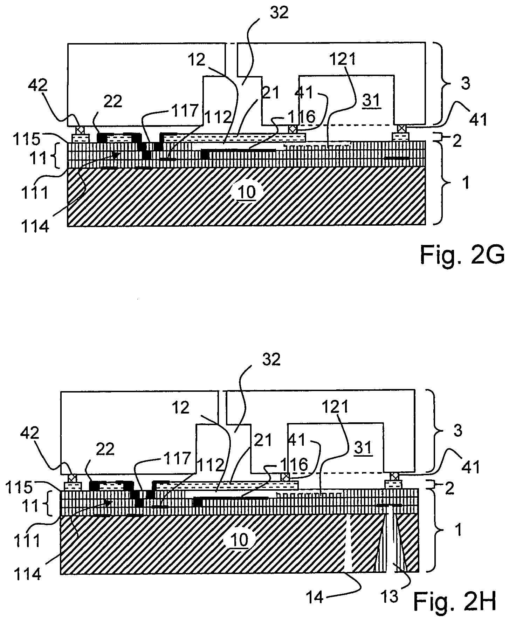

After the bonding process the substrate 10 of wafer 1 is reduced from its original thickness, which corresponds to a standard thickness of a CMOS wafer (at the current state of technology about 700 microns), to a reduced thickness as shown in Fig. 2G. This process can be performed using grinding, etching or milling. In the present example, the reduced thickness is in the range of 100 to 200 microns and considered sufficient to provide some mechanical strength while at the same time facilitating the etching of the through-silicon hole or holes 13 for the TSV contacting. An insulating layer of SiO2 is grown on the surface of the hole 13. For this step as illustrated in Fig. 2H most of the mechanical strength and handling area is provided by cover wafer 3. In other words the stack of wafers is handled using the top layer as handle.

Stress relieve trench or trenches 14 can be etched into the substrate 10 either before or after the step of generating the hole or holes 13 for the TSV contacts.

The total height of the stack of the three wafers 1,2,3 is in the range of 500 to 600 microns. Considering further that the material of cover wafer 3 is selected to be sufficient resilient to be exposed to the environment without additional packaging, a complete pressure sensor on a chip can be manufactured with smaller dimensions than known sensors.

While above there are shown and described embodiments of the invention, it is to be understood that the invention is not limited thereto but may be otherwise variously embodied and practised within the scope of the following claims.

## Claims

1. A pressure sensor, particularly an absolute pressure sensor, comprising a deformable membrane(21) separating a cavity and a port (32) open to an outside of the sensor, with the cavity having a measuring chamber (12) with an associated sensing device (116) to transfer a response of the deformable membrane (21) to pressure at the port (32) into a signal capable of being processed by a processing circuit (114) being mounted onto a substrate (10), wherein the sensor comprises a stack of at least three layers with a first layer (1) comprising the substrate (10) with the processing circuit (114),a second layer (2) bonded onto the first layer and comprising the membrane and a third layer (3) of handling layer thickness bonded onto the first or second layer (1,2) wherein the port includes an opening traversing the third layer (3), the sensor having further a buffer chamber (31) with a volume larger than a volume of the measuring chamber (12), the buffer chamber being connected to a channel (121) to allow fluid transfer to and from the measuring chamber (12), wherein the measuring chamber (12) is located beneath a plane of the membrane (21) and buffer chamber is located above the plane of the membrane (21) and the channel (121) traverses the plane of the membrane (21).

2. The sensor of claim 1, wherein the thickness of the third layer (3) is at least 50 per cent of the total height of the stack.

3. The sensor of claim 1 or 2, wherein the thickness of the substrate (10) is less than 250 µm.

4. The sensor of any of the preceding claims, wherein the third layer (3) is made of silicon or glass.

5. The sensor of any of the preceding claims, wherein the processing circuit (114) has at least one external electrical lead (13) passing through the substrate (10).

6. The sensor of claim 5, wherein the processing circuit (114) is contacted from the outside exclusively through electrical leads (13) passing through the substrate (10).

7. The sensor of any of the preceding claims, wherein the membrane (21) is at least partly mechanically decoupled from surrounding sections of the sensor.

8. The sensor of claim 1 wherein the substrate (10) and/or the third layer (3) include one or more trenches (14) or slits in the vicinity of the membrane.

9. The sensor of claim 1, wherein the buffer chamber (31) is formed as a recess within the third layer (3).

10. The sensor of claim 9, wherein an opening of the recess (31) oriented towards the plane of the membrane (21) is surrounded by a hermetic seal (41).

11. The sensor of any of the preceding claims wherein an opening of the port (32) oriented towards the plane of the membrane (21) is surrounded by a hermetic seal (42).

12. The sensor of claim 11, wherein the port (32) and an area of the membrane (21) covering the measuring chamber (12) are offset in vertical direction thus preventing a direct impact through the port (32) onto the area of the membrane (21) covering the measuring chamber (12).

13. The sensor of any of the preceding claims, wherein the cavity has at essentially constant pressure in the operational sensor.

14. A method for manufacturing a pressure sensor comprising the steps of
providing a first wafer (1) comprising a base substrate (10) of silicon with a processing circuitry (114) integrated thereon and at least one material layer deposited on said base substrate (10),
providing a second wafer (2),
manufacturing a recess (12) and a channel (121) in the first wafer (1) by locally removing or omitting said material layer (11),
mounting said second wafer (2), or a chip prepared from said second wafer, on said first wafer (1), and processing the second wafer (2) to form at least part of a deformable membrane (21) into a lid over the recess so as to form a measuring chamber (12) for sensing a pressure,
providing a third wafer (3) with a port (32) traversing the third wafer (3) or an opening (321);
mounting said third wafer (3), or a chip prepared from said third wafer, onto a top surface of the processed second wafer (2) or the first wafer (1) to form a handling layer used to handle the sensor during subsequent processing steps, and wherein a recess is formed in a face of the third wafer (3) to be oriented towards the plane of the membrane (21) to form a buffer chamber (31) of a volume larger than a volume of the measuring chamber (12) with the buffer chamber (31) being connected to the first chamber (12) via a channel (121) to form a joint cavity at essentially constant pressure.

15. The method of claim 14, wherein the port (32) is provided using a first process step to generate a recess (321) in a face of the third layer (3) to be oriented towards the plane of the membrane (21) and a second step to generate a hole (322) through the remainder of the third layer (3) connecting the recess (321) to the outside of the sensor.

16. The method of claim 14 or 15 further comprising the step of creating one or more holes (13) through the substrate (10) for providing electrical contacts to the processing circuit from a bottom of the substrate (10).

17. The method of claim 16 further comprising the step of reducing a thickness of the substrate (10).

18. The method of claim 17 further comprising the step of using the third wafer (3) as handle substrate after the bonding and prior to the step of reducing the thickness of the substrate (10).

19. The method of any of claims 14 to 18 further comprising the step of at least partly mechanically decoupling the membrane (21) from surrounding sections of the sensor.

20. The method of claim 19, wherein the step of at least partially mechanically decoupling the membrane (21) from surrounding sections of the sensor comprises the step of forming one or more trenches (14) or slits in the substrate (1) and/or in the third wafer (3) within the vicinity of the membrane (21).

## Patentansprüche

1. Drucksensor, insbesondere ein Absolutdrucksensor, mit einer verformbaren Membran (21), die einen Hohlraum und einen zu einer Außenseite des Sensors offenen Anschluss (32) trennt, wobei der Hohlraum eine Messkammer (12) mit einer zugehörigen Sensorvorrichtung (116) aufweist, um eine Reaktion der verformbaren Membran (21) auf Druck am Anschluss (32) in ein Signal zu übertragen, das von einer auf einem Substrat (10) montierten Verarbeitungsschaltung (114) verarbeitet werden kann, wobei der Sensor einen Stapel von mindestens drei Schichten mit einer ersten Schicht (1) umfasst, die das Substrat (10) mit der Verarbeitungsschaltung (114) umfasst, einer zweiten Schicht (2), die an die erste Schicht geklebt ist und die Membran umfasst, und eine dritte Schicht (3) mit einer Handhabungsschichtdicke umfasst, die an die erste oder zweite Schicht (1, 2) geklebt ist, wobei der Anschluss eine Öffnung umfasst, die die dritte Schicht (3) durchquert, wobei der Sensor ferner eine Pufferkammer (31) mit einem Volumen aufweist, das größer als ein Volumen der Messkammer (12) ist, wobei die Pufferkammer mit einem Kanal (121) verbunden ist, um eine Fluidübertragung zu und von der Messkammer (12) zu ermöglichen, wobei die Messkammer (12) unterhalb einer Ebene der Membran (21) angeordnet ist und die Pufferkammer oberhalb der Ebene der Membran (21) angeordnet ist und der Kanal (121) die Ebene der Membran (21) durchquert.

2. Sensor nach Anspruch 1, wobei die Dicke der dritten Schicht (3) mindestens 50 Prozent der Gesamthöhe des Stapels beträgt.

3. Sensor nach Anspruch 1 oder 2, wobei die Dicke des Substrats (10) weniger als 250 µm beträgt.

4. Sensor nach einem der vorhergehenden Ansprüche, wobei die dritte Schicht (3) aus Silizium oder Glas besteht.

5. Sensor nach einem der vorhergehenden Ansprüche, wobei die Verarbeitungsschaltung (114) mindestens eine externe elektrische Leitung (13) aufweist, die durch das Substrat (10) verläuft.

6. Sensor nach Anspruch 5, wobei die Verarbeitungsschaltung (114) von außen ausschließlich über elektrische Leitungen (13) kontaktiert wird, die durch das Substrat (10) verlaufen.

7. Sensor nach einem der vorhergehenden Ansprüche, wobei die Membran (21) mindestens teilweise mechanisch von den umgebenden Abschnitten des Sensors entkoppelt ist.

8. Sensor nach Anspruch 1, wobei das Substrat (10) und/oder die dritte Schicht (3) einen oder mehrere Gräben (14) oder Schlitze in der Nähe der Membran aufweisen.

9. Sensor nach Anspruch 1, wobei die Pufferkammer (31) als Aussparung in der dritten Schicht (3) ausgebildet ist.

10. Sensor nach Anspruch 9, wobei eine Öffnung der Aussparung (31), die zur Ebene der Membran (21) hin ausgerichtet ist, durch eine hermetische Dichtung (41) umgeben ist.

11. Sensor nach einem der vorhergehenden Ansprüche, wobei eine Öffnung des Anschlusses (32), die zur Ebene der Membran (21) hin ausgerichtet ist, durch eine hermetische Dichtung (42) umgeben ist.

12. Sensor nach Anspruch 11, wobei der Anschluss (32) und ein Bereich der Membran (21), der die Messkammer (12) bedeckt, in vertikaler Richtung versetzt sind, wodurch ein direkter Aufprall durch den Anschluss (32) auf den Bereich der Membran (21), der die Messkammer (12) bedeckt, verhindert wird.

13. Sensor nach einem der vorhergehenden Ansprüche, wobei der Hohlraum im betriebsbereiten Sensor einen im Wesentlichen konstanten Druck aufweist.

14. Verfahren zur Herstellung eines Drucksensors, umfassend die Schritte:
Bereitstellen eines ersten Wafers (1) mit einem Basissubstrat (10) aus Silizium mit einer darauf integrierten Verarbeitungsschaltung (114) und mindestens einer auf dem Basissubstrat (10) aufgebrachten Materialschicht,
Bereitstellen eines zweiten Wafers (2),
Herstellen einer Aussparung (12) und eines Kanals (121) im ersten Wafer (1) durch lokales Entfernen oder Weglassen der Materialschicht (11),
Montieren des zweiten Wafers (2) oder eines aus dem zweiten Wafer vorbereiteten Chips auf dem ersten Wafer (1) und Bearbeiten des zweiten Wafers (2), um mindestens einen Teil einer verformbaren Membran (21) zu einem Deckel über der Aussparung zu bilden, sodass eine Messkammer (12) zum Erfassen eines Drucks gebildet wird,
Bereitstellen eines dritten Wafers (3) mit einem Anschluss (32), der den dritten Wafer (3) durchquert, oder einer Öffnung (321);
Montieren des dritten Wafers (3) oder eines aus dem dritten Wafer vorbereiteten Chips auf eine Oberseite des bearbeiteten zweiten Wafers (2) oder des ersten Wafers (1), um eine Handhabungsschicht zu bilden, die zum Handhaben des Sensors während nachfolgender Bearbeitungsschritte verwendet wird, und wobei eine Aussparung in einer Fläche des dritten Wafers (3) ausgebildet ist, die auf die Ebene der Membran (21) ausgerichtet ist, um eine Pufferkammer (31) mit einem Volumen zu bilden, das größer als ein Volumen der Messkammer (12) ist, wobei die Pufferkammer (31) über einen Kanal (121) mit der ersten Kammer (12) verbunden ist, um einen gemeinsamen Hohlraum mit im Wesentlichen konstantem Druck zu bilden.

15. Verfahren nach Anspruch 14, wobei der Anschluss (32) mittels eines ersten Verfahrensschrittes bereitgestellt wird, um eine Aussparung (321) in einer Stirnfläche der dritten Schicht (3) zu erzeugen, die auf die Ebene der Membran (21) auszurichten ist, und eines zweiten Schrittes, um ein Loch (322) durch den Rest der dritten Schicht (3) zu erzeugen, das die Aussparung (321) mit der Außenseite des Sensors verbindet.

16. Verfahren nach Anspruch 14 oder 15, ferner umfassend den Schritt des Erzeugens eines oder mehrerer Löcher (13) durch das Substrat (10) zum Bereitstellen elektrischer Kontakte für die Verarbeitungsschaltung von einer Unterseite des Substrats (10) her.

17. Verfahren nach Anspruch 16, ferner umfassend den Schritt des Verringerns einer Dicke des Substrats (10).

18. Verfahren nach Anspruch 17, ferner umfassend den Schritt des Verwendens des dritten Wafers (3) als Griffsubstrat nach dem Kleben und vor dem Schritt des Reduzierens der Dicke des Substrats (10).

19. Verfahren nach einem der Ansprüche 14 bis 18, ferner umfassend den Schritt des mindestens teilweisen mechanischen Entkoppelns der Membran (21) von den umgebenden Abschnitten des Sensors.

20. Verfahren nach Anspruch 19, wobei der Schritt des mindestens teilweisen mechanischen Entkoppelns der Membran (21) von den umgebenden Abschnitten des Sensors den Schritt des Bildens eines oder mehrerer Gräben (14) oder Schlitze im Substrat (1) und/oder im dritten Wafer (3) in der Nähe der Membran (21) umfasst.

## Revendications

1. Capteur de pression, particulièrement capteur de pression absolue, comprenant une membrane déformable (21) séparant une cavité et un orifice (32) ouvert vers un extérieur du capteur, cette cavité ayant une chambre de mesure (12) avec un dispositif de détection associé (116) pour transférer une réponse de la membrane déformable (21) à la pression au niveau de l'orifice (32) en un signal capable d'être traité par un circuit de traitement (114) étant monté sur un substrat (10), ce capteur comportant une pile d'au moins trois couches avec une première couche (1) comprenant le substrat (10) avec le circuit de traitement (114), une deuxième couche (2) collée sur la première couche et comprenant la membrane et une troisième couche (3) d'une épaisseur de couche de manipulation collée sur la première ou sur la deuxième couche (1, 2), l'orifice comportant une ouverture traversant la troisième couche (3), ce capteur ayant en outre une chambre tampon (31) avec un volume plus grand qu'un volume de la chambre de mesure (12), cette chambre tampon étant reliée à une voie (121) pour permettre le transfert de fluide vers et depuis la chambre de mesure (12), la chambre de mesure (12) étant située en dessous d'un plan de la membrane (21) et la chambre tampon étant située au-dessus du plan de la membrane (21) et la voie (121) traversant le plan de la membrane (21).

2. Capteur selon la revendication 1, dans lequel l'épaisseur de la troisième couche (3) est au moins 50 % de la hauteur totale de la pile.

3. Capteur selon la revendication 1 ou 2, dans lequel l'épaisseur du substrat (10) est moins que 250 µm.

4. Capteur selon l'une quelconque des revendications précédentes, dans lequel la troisième couche (3) est faite de silicium ou de verre.

5. Capteur selon l'une quelconque des revendications précédentes, dans lequel le circuit de traitement (114) a au moins un fil électrique externe (13) passant à travers le substrat (10).

6. Capteur selon la revendication 5, dans lequel le circuit de traitement (114) est contacté depuis l'extérieur exclusivement par l'intermédiaire de fils électriques (13) passant à travers le substrat (10).

7. Capteur selon l'une quelconque des revendications précédentes, dans lequel la membrane (21) est au moins partiellement désaccouplée mécaniquement des sections environnantes du capteur.

8. Capteur selon la revendication 1, dans lequel le substrat (10) et/ou la troisième couche (3) comportent un ou plusieurs sillons (14) ou une ou plusieurs fentes à proximité de la membrane.

9. Capteur selon la revendication 1, dans lequel la chambre tampon (31) est formée comme un évidement à l'intérieur de la troisième couche (3).

10. Capteur selon la revendication 9, dans lequel une ouverture de l'évidement (31) orientée vers le plan de la membrane (21) est entourée par un joint d'étanchéité hermétique (41).

11. Capteur selon l'une quelconque des revendications précédentes, dans lequel une ouverture de l'orifice (32) orientée vers le plan de la membrane (21) est entourée par un joint d'étanchéité hermétique (42).

12. Capteur selon la revendication 11, dans lequel l'orifice (32) et une surface de la membrane (21) couvrant la chambre de mesure (12) sont décalées dans la direction verticale, empêchant ainsi un impact direct à travers l'orifice (32) sur la surface de la membrane (21) couvrant la chambre de mesure (12).

13. Capteur selon l'une quelconque des revendications précédentes, dans lequel la cavité a une pression essentiellement constante dans le capteur opérationnel.

14. Procédé de fabrication d'un capteur de pression comprenant les étapes consistant à :
prévoir une première tranche (1) comprenant un substrat de base (10) en silicium avec un circuit de traitement (114) intégré sur celui-ci et au moins une couche de matière déposée sur ledit substrat de base (10),
la prévision d'une deuxième tranche (2),
la fabrication d'un évidement (12) et d'une voie (121) dans la première tranche (1) en enlevant ou en omettant localement ladite couche de matière (11),
le montage de ladite deuxième tranche (2), ou d'une puce préparée à partir de ladite deuxième tranche, sur ladite première tranche (1), et le traitement de la deuxième tranche (2) afin de former au moins une partie d'une membrane déformable (21) en un couvercle au-dessus de l'évidement afin de former une chambre de mesure (12) pour détecter une pression,
la prévision d'une troisième tranche (3) avec un orifice (32) traversant cette troisième tranche (3) ou une ouverture (321) ;
le montage de ladite troisième tranche (3), ou d'une puce préparée à partir de ladite troisième tranche, sur une surface supérieure de la deuxième tranche traitée (2) ou de la première tranche (1) afin de former une couche de manipulation utilisée pour manipuler le capteur pendant les étapes de traitement ultérieures, et un évidement étant formé dans une face de la troisième tranche (3) de manière à être orienté vers un plan de la membrane (21) afin de former une chambre tampon (31) d'un volume plus grand qu'un volume de la chambre de mesure (12) avec la chambre tampon (31) étant reliée à la première chambre (12) via une voie (121) afin de former une cavité conjointe à une pression essentiellement constante.

15. Procédé selon la revendication 14, dans lequel l'orifice (32) est prévu en utilisant une première étape de traitement afin de produire un évidement (321) dans une face de la troisième couche (3) de manière à être orienté vers le plan de la membrane (21) et une deuxième étape pour produire un trou (322) à travers le reste de la troisième couche (3) reliant l'évidement (321) à l'extérieur du capteur.

16. Procédé selon la revendication 14 ou 15, comprenant en outre l'étape consistant à créer un ou plusieurs trous (13) à travers le substrat (10) pour fournir des contacts électriques au circuit de traitement depuis un fond du substrat (10).

17. Procédé selon la revendication 16, comprenant en outre l'étape consistant à réduire une épaisseur du substrat (10).

18. Procédé selon la revendication 17, comprenant en outre l'étape consistant à utiliser la troisième couche (3) comme un substrat de manipulation après le collage et avant l'étape de réduction de l'épaisseur du substrat (10).

19. Procédé selon l'une quelconque des revendications 14 à 18, comprenant en outre l'étape consistant à désaccoupler mécaniquement au moins partiellement la membrane (21) des sections environnantes du capteur.

20. Procédé selon la revendication 19, dans lequel l'étape consistant à désaccoupler mécaniquement au moins partiellement la membrane (21) des sections environnantes du capteur comprend l'étape consistant à former un ou plusieurs sillons (14) ou une ou plusieurs fentes dans le substrat (1) et/ou dans la troisième tranche (3) à proximité de la membrane (21).
